Europäisches Patentamt

European Patent Office

Office européen des brevets

(11) Numéro de publication: **0 377 206**

**A1**

## (12) DEMANDE DE BREVET EUROPEEN

(21) Numéro de dépôt: 89123960.0

(22) Date de dépôt: 27.12.89

(51) Int. Cl.5: **H01S 3/094, H01S 3/06**

(30) Priorité: 03.01.89 FR 8900029

(43) Date de publication de la demande:
**11.07.90 Bulletin 90/28**

(84) Etats contractants désignés:
**AT BE DE ES FR GB IT NL SE**

(71) Demandeur: **LASERDOT**
**37, boulevard de Montmorency**
**F-75116 Paris(FR)**

(72) Inventeur: **Cabaret, Louis**
**5ter, rue de la Vallée Michelot**
**Plessis Saint Benoist F-91410 Dourdan(FR)**
Inventeur: **Girard, Geneviève**
**13, Parc de Diane**
**F-78350 Jouy en Josas(FR)**
Inventeur: **Pinson, Pierre**
**10, rue de la Fontaine Vaugrigneuse**
**F-91640 Briis Sous Forges(FR)**
Inventeur: **De Saxce, Thibaut**
**20, avenue des Alliés**
**F-91120 Palaiseau(FR)**

(74) Mandataire: **Weinmiller, Jürgen et al**
**Lennéstrasse 9 Postfach 24**
**D-8133 Feldafing(DE)**

(54) **Laser à plaque avec pompage optique par source à plage d'émission étroite.**

(57) Un laser à plaque Nd/YAG (1) est pompé par des diodes laser (2) qui sont placées à distance de la plaque laser. Des réflecteurs (7) conduisent la lumière de ces diodes vers cette plaque. La distance est telle que la densité de cette lumière est homogénéisée. Un fluide de refroidissement circule dans un compartiment (5) entre les diodes et cette plaque.

FIG.1

EP 0 377 206 A1

# Laser à plaque avec pompage optique par source à plage d'émission étroite.

La présente invention concerne la réalisation d'un laser à pompage optique dont le milieu actif présente la forme d'une plaque. Pour constituer des sources de lumière de pompage pour un tel laser il est connu d'utiliser des diodes laser. Une telle diode est constituée d'une plaquette semi-conductrice et émet sa lumière à partir d'une plage d'émission étroite dont les dimensions peuvent être par exemple 0,001 et 10 mm. Le faisceau de pompe formé présente alors des angles de divergence de 20 et 90 degrés, environ.

Un laser connu utilisant de telles sources de pompage comporte certains éléments essentiels qui lui sont communs, aux moins quant à leurs fonctions indiquées ci-après, avec un laser selon la présente invention.

Ces éléments essentiels communs sont :
- une plaque laser ayant deux faces principales qui présentent chacune deux bords qui s'étendent selon une direction longitudinale et qui sont séparés par une largeur de cette plaque selon une direction transversale, cette plaque ayant en outre une épaisseur selon une direction de pompage et des sections selon les directions transversales et de pompage, le matériau de cette plaque étant apte à être excité par une lumière de pompe arrivant selon cette direction de pompage pour amplifier une lumière à amplifier se propageant selon cette direction longitudinale,
- au moins une source de pompage en regard d'au moins une dite face principale pour fournir une dite lumière de pompe répartie selon ladite direction longitudinale, chaque dite source émettant cette lumière par une plage d'émission qui est étroite par rapport à ladite plaque selon au moins ladite direction transversale,
- et un système réflecteur propre à réfléchir ladite lumière de pompe de manière à éviter des pertes de lumière.

Un tel laser connu est décrit dans l'article : Diode-laser-array-pumped neodymium slab oscillators, M. K. Reed. W.J. KOZLOVSKY, and R.L. BYER, G.L. HARNAGEL and P.S. CROSS, OPTICS LETTERS/Vol. 13, N° 3 / March 1988.

Le réflecteur de ce laser est constitué d'un simple miroir qui est disposé en regard d'une face principale de la plaque, à savoir de la face opposée à celle qui est éclairée par les sources de pompage. Il permet d'augmenter le rendement énergétique global du laser en diminuant les pertes de lumière de pompe vers l'extérieur du laser.

Il reste cependant souhaitable d'augmenter encore le rendement d'un tel laser, et/ou la puissance lumineuse qu'il est capable de fournir.

La présente invention a notamment pour buts d'augmenter l'homogénéité de pompage tout en évitant des pertes de lumière de pompe vers l'extérieur d'un tel laser, et en permettant le refroidissement de la plaque.

Un laser selon cette invention comporte les éléments essentiels communs précédemment mentionnés et il présente certaines au moins des dispositions préférées suivantes :
- La dite plage d'émission de chaque dite source de pompage est disposée dans une bande d'émission s'étendant longitudinalement en regard d'une dite face principale à une distance de cette face qui constitue une distance de pompage, cette bande d'émission présentant deux bords longitudinaux, ledit système réflecteur comportant pour chaque dite bande d'émission deux réflecteurs qui s'étendent longitudinalement et qui réunissent selon ladite direction de pompage les deux dits bords de cette bande d'émission aux deux dits bords de ladite face principale en regard de cette bande, respectivement, de manière à former un conduit de lumière conduisant ladite lumière de pompe de cette bande d'émission à cette face principale sur ladite distance de pompage, cette distance de pompage étant choisie suffisante pour que cette lumière soit sensiblement homogénéisée sur la largeur de cette face principale. Cette disposition permet à la fois d'obtenir une bonne homogénéité du pompage et de minimiser les pertes de lumière de pompage.
- Le laser comporte en outre un circuit de refroidissement pour faire circuler un fluide de refroidissement dans ledit conduit de lumière, de préférence selon ladite direction longitudinale. Cette disposition permet d'obtenir de manière simple un refroidissement efficace du barreau.
- Ladite distance de pompage est comprise entre 50% et 200% d'une distance de recouvrement qui est telle que, si une dite source de pompage était située en regard d'une dite face principale à cette distance de cette face, le faisceau divergent émis par cette source et non guidé éclairerait la largeur de cette face et seulement cette largeur. Plus précisément la distance de pompage est de l'ordre de grandeur de ladite distance de recouvrement.

A l'aide des figures schématiques ci-jointes, on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence. Le mode de mise en oeuvre donné en exemple comporte les dispositions préférées mentionnées ci-dessus. Il doit être compris que les éléments mentionnés peuvent être remplacés par d'autres éléments assurant les mêmes fonctions techniques.

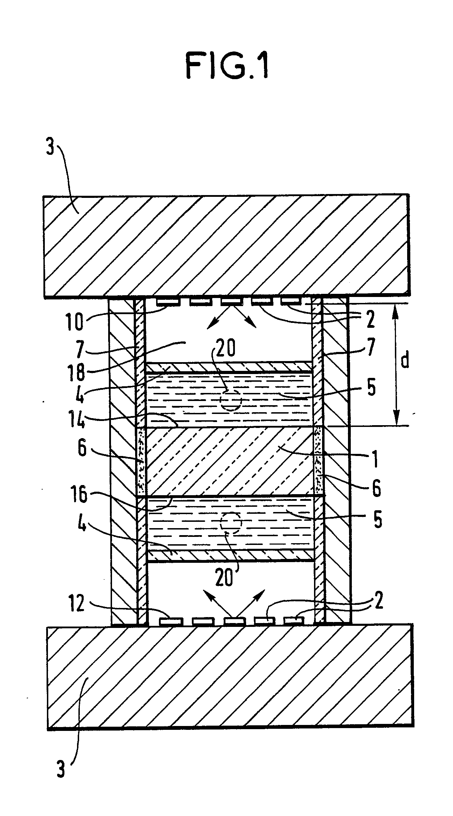

La figure 1 représente une vue d'un laser selon l'invention en coupe par un plan vertical transversal, la direction verticale étant ladite direction de pompage.

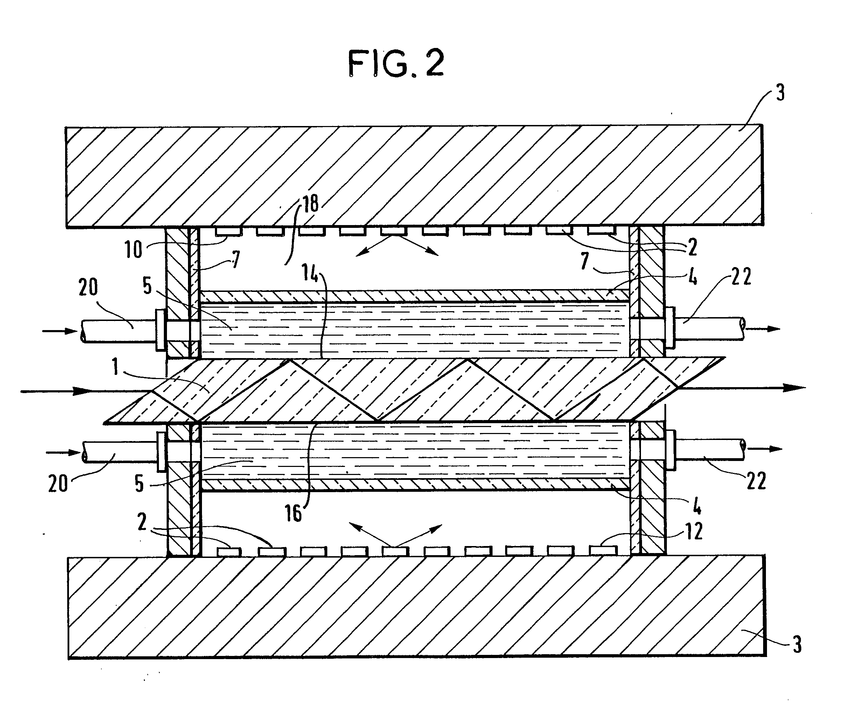

La figure 2 représente une vue de ce même laser en coupe par un plan vertical longitudinal.

Dans le laser donne en exemple lesdites sources de pompage sont des diodes laser 2 de type connu et ladite distance de pompage est représentée en d. Elle est de quelques millimètres. Ces sources pourraient cependant être de nature différente de même que les plages d'émission qui pourraient être notamment constituées par les extrémités de fibres optiques amenant une lumière de pompe produite à distance du réflecteur.

Les plages d'émission de ces diodes sont réparties, selon les directions longitudinale et transversale dans deux dites bandes d'émission 10, 12 en regard des deux dites faces principales 14, 16 de la plaque laser 1 , respectivement, le laser étant symétrique par rapport aux plans de symétrie de la plaque 1. De chaque côté de cette plaque, ces diodes sont refroidies par un dissipateur de chaleur métallique tel que 3 muni d'un circuit de refroidissement non représenté.

Les deux faces latérales de la plaque laser 1 sont revêtues d'une couche d'isolant thermique telle que 6.

Deux réflecteurs tels que 7 s'étendent des deux bords de chacune des deux faces principales telle que 14 jusqu'aux deux bords de la bande d'émission en regard telle que 10.

Ledit circuit de refroidissement 20, 5, 22 comporte une fenêtre 4 transparente à ladite lumière de pompe et s'étendant selon les dites directions longitudinale et transversale entre la dite bande d'émission 10 et ladite face principale 14 en regard de cette bande. Elle forme dans ledit conduit de lumière 5, 18 un compartiment de refroidissement 5 en contact au moins thermique avec cette face principale et à distance de cette bande d'émission.

Elle reçoit un traitement antiréflexion pour la lumière de pompage.

Elle s'étend transversalement comme ce compartiment l'un à l'autre des deux réflecteurs tels que 7.

Le conduit de lumière comporte un autre compartiment 18 entre cette fenêtre et la bande d'émission 10.

Le circuit de refroidissement comporte, outre le compartiment 5, des tubulures d'arrivée et de sortie d'eau telles que 20 et 22 et des éléments extérieurs non représentés.

Il est a noter que, dans le cas où les plages d'émission seraient constituées par les faces d'extrémités de fibres optiques, ces plages pourraient être immergées dans l'eau de refroidissement, et il ne serait pas nécessaire de prévoir une fenêtre telle que 4.

Les surfaces des plages d'émission entre ces fibres seraient alors avantageusement traitées pour réfléchir la lumière de pompage.

Le laser qui vient d'être décrit présente les caractéristiques et avantages suivants :
- Les diodes laser sont suffisamment écartées de la plaque laser pour que les plans "d'équi-excitation" soient parallèles aux faces principales de celle-ci. On évite ainsi tout point de "sur-excitation" qui entraînerait des inhomogénéités dans le faisceau laser. Un programme informatique de simulation du dépôt d'énergie dans la plaque rend bien compte de cet effet et permet de calculer dans chaque cas particulier la distance minimale entre les diodes laser et la plaque.
- Les réflecteurs 7 permettent de diriger vers la plaque ceux des rayons émis par les diodes laser qui n'ont pu l'atteindre du fait de l'éloignement de ces diodes.
- Cet éloignement permet d'insérer deux fenêtres traitées antireflet à la longueur d'onde d'émission des diodes laser et et de faire circuler un liquide de refroidissement alors que cela n'est pas possible dans le cas où les diodes laser sont placées au voisinage de la plaque. De ce fait le laser peut fonctionner à puissance moyenne élevée.

A titre d'exemple numérique on peut citer un laser Nd : YAG continu de puissance 100 W
- Plaque en $Nd^{3+}$ : YAG.
- Dimensions de cette plaque : 5 x 9 x 80 mm (volume 3.5 cm3). - Puissance totale de la lumière de pompe : 400 W, produite par 40 diodes laser de 10 W chacune. On place 5 séries de 4 diodes laser de chaque côté de la plaque.

Ces 20 diodes lasers peuvent être intégrées sous la forme d'un bloc semi-conducteur dit "diode laser monobloc à deux dimensions".
- Longueur d'onde centrale d'émission des diodes laser : 807 nm.
- Puissance électrique d'alimentation des diodes laser = 1 kW.

**Revendications**

1/ Laser à plaque avec pompage optique par source à plage d'émission étroite, ce laser comportant :
- une plaque laser (1) ayant deux faces principales (14, 16) qui présentent chacune deux bords qui s'étendent selon une direction longitudinale et qui sont séparés par une largeur de cette plaque selon une direction transversale, cette plaque ayant en outre une épaisseur selon une direction de pompage et des sections selon les directions transversales et de pompage, le matériau de cette plaque étant apte à être excité par une lumière de pompe arrivant selon cette direction de pompage pour amplifier une lumière à amplifier se propageant selon cette direction longitudinale,

- au moins une source de pompage (2) en regard d'au moins une dite face principale (14) pour fournir une dite lumière de pompe répartie selon ladite direction longitudinale, chaque dite source émettant cette lumière par une plage d'émission qui est étroite par rapport à ladite plaque selon au moins ladite direction transversale,

- et un système réflecteur propre à réfléchir ladite lumière de pompe de manière à éviter des pertes,

- ce laser étant caractérisé par le fait que ladite plage d'émission de chaque dite source de pompage (2) est disposée dans une bande d'émission (10) s'étendant longitudinalement en regard d'une dite face principale (14) à une distance de cette face qui constitue une distance de pompage (d), cette bande d'émission présentant deux bords longitudinaux

- ledit système réflecteur comportant pour chaque dite bande d'émission deux réflecteurs (7) qui s'étendent longitudinalement et qui réunissent selon ladite direction de pompage les deux dits bords de cette bande d'émission (10) aux deux dits bords de ladite face principale (14) en regard de cette bande, respectivement, de manière à former un conduit de lumière (5, 18) conduisant ladite lumière de pompe de cette bande d'émission à cette face principale sur ladite distance de pompage, cette distance de pompage étant choisie suffisante pour que cette lumière soit sensiblement homogénéisée sur la largeur de cette face principale.

2/ Laser selon la revendication 1, caractérisé par le fait qu'il comporte en outre un circuit de refroidissement (20, 5, 22) pour faire circuler un fluide de refroidissement dans ledit conduit de lumière (5, 18).

3/ Laser selon la revendication 2, caractérisé par le fait que ledit circuit de refroidissement fait circuler (20, 5, 22) un fluide de refroidissement selon ladite direction longitudinale.

4/ Laser selon la revendication 2, caractérisé par le fait que ledit circuit de refroidissement (20, 5, 22) comporte une fenêtre (4) transparente à ladite lumière de pompe et s'étendant selon les dites directions longitudinale et transversale entre la dite bande d'émission (10) et ladite face principale (14) en regard de cette bande de manière à former dans ledit conduit de lumière (5, 18) un compartiment de refroidissement (5) en contact au moins thermique avec cette face principale et à distance de cette bande d'émission.

5/ Laser selon la revendication 1, caractérisé par le fait que ladite distance de pompage (d) est supérieure à 50% d'une distance de recouvrement qui est telle que, si une dite source de pompage était située en regard d'une dite face principale (14) à cette distance de cette face, le faisceau divergent émis par cette source et non guidé éclairerait la largeur de cette face et seulement cette largeur.

6/ Laser selon la revendication 1, caractérisé par le fait qu'il comporte deux dites bandes d'émission (10, 12) en regard des deux dites faces principales (IU, 16) de la plaque laser (1), respectivement.

7/ Laser selon la revendication 6, caractérisé par le fait que chaque dite bande d'émission (10) contient les plages d'émission de plusieurs dites sources de pompage (2) réparties selon lesdites directions longitudinale et/ou transversale.

8/ Laser selon la revendication 1, dans lequel lesdites sources de pompage sont des diodes laser (2)

9/ Laser selon la revendication 5, caractérisé par le fait que ladite distance de pompage (d) est inférieure à deux fois ladite distance de recouvrement.

# FIG.1

# FIG. 2

EP 0 377 206 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 593 615 (B.M. INDUSTRIES S.A.) * Résumé; figures 1-4; revendications 1-2,8-9,13-14 * | 1 | H 01 S 3/094 H 01 S 3/06 |
| A | * Revendications 9-10,15 * | 2-4,6 | |
| Y | NACHRICHTEN ELEKTRONIK, vol. 32, no. 1, janvier 1978, pages 5-9, Heidelberg, DE; W.W. KRÜHLER: "Eigenschaften von Neodym-Lasern für die optische Nachrichtentechnik" * Figure 1 * | 1 | |
| A | IDEM | 7 | |
| Y,D | OPTICS LETTERS, vol. 13, no. 3, mars 1988, pages 204-206, Optical Society of America, New York, US; M.K. REED et al.: "Diode-laser-array-pumped neodymium slab oscillators" * Figure 1; page 206, colonne de droite, lignes 1-18,24-32; page 204, colonne de droite, lignes 7-19 * | 1 | |
| | | | **DOMAINES TECHNIQUES RECHERCHES (Int. Cl.5)** |
| A | IDEM | 7-8 | H 01 S |
| A | US-A-4 791 634 (MIYAKE) * Abrégé; figures 2-4; colonne 1, ligne 54 - colonne 2, ligne 61; colonne 4, ligne 41 - colonne 6, ligne 15 * | 1,5,6,8 | |
| A | FR-A-2 096 648 (GENERAL ELECTRIC CO.) * Revendications 1,9; figures * | 1-4,6 | |
| A | EP-A-0 296 512 (LASAG AG) * Résumé; figures 1,2; revendications 1-2 * | 1-4,6 | |

Le présent rapport a été établi pour toutes les revendications

| Lieu de la recherche | Date d'achèvement de la recherche | Examinateur |
|---|---|---|
| LA HAYE | 20-03-1990 | CONRAD V.HEYDENDORFF K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)